# EUROPEAN PATENT APPLICATION

(11) **EP 4 190 726 A1**
(43) Date of publication of application: **07.06.2023**
(21) Application number: 21853575.5
(22) Date of filing: 30.07.2021
(51) Int. Cl.: B65G 21/08

(54) **ENCLOSED CONVEYOR**

(30) Priority: 03.08.2020 BR 102020015783
(71) Applicant: TMSA - Tecnologia Em Movimentacao S.A., 91160-310 Porto Alegre - RS (BR)
(72) Inventor: KEISERMAN, Edison, 90450-231 Porto Alegre RS (BR)
(74) Representative: Ipsilon
(86) International application number: PCT/BR2021/050320
(87) International publication number: WO 2022/027117

(57) **Abstract**

**Abstract:** The present invention relates to an enclosed conveyor (10) for bulk material, provided with an enclosure (20) and a conveyor belt (40) comprising a conveying portion (41) and a return portion (42). More particularly, the invention relates to a bottom cover (50) arranged inside the enclosure (20) of the enclosed conveyor (10), on which the return portion (42) of the conveyor belt (40) slides. In order to facilitate the manufacturing and maintenance of the enclosed conveyor (10), the present invention proposes the use of a bottom cover (50) mounted solely by means of a peripheral region (51).

## Description

### TECHNICAL FIELD

This invention refers to an enclosed conveyor for bulk material provided with an enclosure and a conveyor belt comprising a conveying portion and a return portion. More particularly, the invention refers to a bottom cover arranged inside the enclosure of the enclosed conveyor, on which the return portion of the conveyor belt slides.

### STATE-OF-THE-ART

Enclosed conveyors are equipment used to transport bulk material, such as, for example, grains, pellets or wood chips, by means of a conveyor belt arranged over a set of rollers. In a conventional enclosed conveyor, the conveyor belt is protected from the adverse conditions of the environment where it is operating by means of an enclosure, formed by a number of intermediate modules of different lengths, by a return module arranged in one of the ends, provided with a return roller, and by a traction module arranged in the opposite end, said traction module being provided with a traction motor cooperating with a traction roller responsible for moving said conveyor belt.

A conventional enclosed conveyor embodiment can be found in patent document BR 10 2019 004398-9 where said conventional enclosed conveyor comprises an enclosure formed by a plurality of side walls provided on a lower plate and provided with an upper plate provided on said side walls, the lower plate being provided with an inner surface directed towards the inner part of said enclosure. In addition, the conventional enclosed conveyor comprises at least a conveyor roller mounted inside said enclosure, and a conveyor belt comprising a conveying portion arranged on said conveyor roller and a return portion arranged above the inner surface of said lower plate. It is noted that as the conveyor belt is in operation, the conveying portion and the return portion alternate with each other due to the rotating movement of said conveyor belt.

Thus, the conveying portion is the portion of the conveyor belt that slides on the conveyor rollers of the enclosed conveyor, while the return portion is the portion of saidsaid conveyor belt which slides above the inner plate of the enclosure of said enclosed conveyor.

In order to reduce the friction between the inner surface of the lower plate and the return portion of the conveyor belt, the conventional enclosed conveyor comprises a number of coating plates arranged on the inner surface of the lower plate and the return portion of the conveyor belt. Each coating plate is made of a low friction polymeric material, such as, for example, ultra-high molecular weight (UHMW) polyethylene, so as to reduce the friction between the return portion of the conveyor belt and saidsaid lower plate of the enclosure, which is generally made of steel.

In the embodiment adopted by the conventional enclosed conveyors, each coating plate has a substantially rectangular shape, and comprises an inner region surrounded by a peripheral region.

The inner region of the coating plate can be defined as an inner superficial area of the coating plate adjacent to the peripheral region. It is noted that the inner region is the region on which the return portion of the conveyor belt presents the largest contact area compared with the peripheral region.

The peripheral region of the coating plate can be defined as a region comprised both by the side surfaces of said coating plate and by a peripheral area around the its entire surface, being that said peripheral area comprises a length sufficient for the due use of fastening elements for the assemble of said coating plate together on the conventional enclosed conveyor. In other words, the peripheral region is comprised by the superficial area of the coating plate edges.

More specifically, each intermediate module of the conventional enclosed conveyor comprises at least one coating plate fixed on the lower plate of the enclosure by means of a number of fixation points distributed throughout the superficial area of said coating plate.

In the conventional enclosed conveyor, the fixation points are distributed on the inner region of the coating plates and, also, on the peripheral region of said coating plates. Thus, it is ensured that the coating plates are duly fixed to the conventional enclosed conveyor.

A fixation point can be defined as being a place where fastening elements are mounted, such as, for example, a fixation like bolt and nut, or welded points. In the case of the conventional enclosed conveyor, each fixation point is comprised by a bolt passing through the coating plate and the lower plate of the enclosure, said bolt being fixed by means of a self-locking nut.

The polymeric material of the coating plate of the conventional enclosed conveyor presents a thermal expansion coefficient considerably higher than that of the steel used in the lower plate of said conventional enclosed conveyor. Thus, the fixation of the coating plates to the lower plate must be conducted in such a way to allow a relative movement.

For that purpose, the lower plate comprises a number of oblong holes in the longitudinal direction of the conventional enclosed conveyor, which enable a certain freedom for the movement of the coating plates in the longitudinal direction. Each oblong hole of the lower plate cooperates with a respective hole provided in a coating plate, in such a way to allow a bolt to be inserted and fixed by means of a self-locking nut. In addition, the self-locking nut must have a specific torque, being that it cannot be excessively of insufficiently tightened, for the coating plate to have the possibility to perform the expected movement due to the thermal expansion differences between said coating plate and the lower plate of the conventional enclosed conveyor.

### TECHNICAL PROBLEM

Therefore, the conventional enclosed conveyor presents drawbacks with respect to the installation of the coating plates. More specifically, the fact that each coating plate is fixed in a number of fixation points distributed throughout the surface of the lower plate of the conventional enclosed conveyor, i.e., both in the inner region and in the peripheral region, and the need for a specific torque which allows a relative movement between the coating plate and the lower plate of the enclosure, make the installation of said coating plates lengthy and costly.

As already explained above, it is necessary to enable a relative movement between the coating plates and the lower plate due to the difference between the thermal expansion coefficients of their materials. Such difference between the thermal expansion coefficients also needs to be taken in to consideration at the time the coating plates are produced, because if the coating plates are cut under cold environmental conditions, there may be an excessive expansion when they are exposed to very hot environmental conditions, such as, for example, during the operation of a an enclosed conveyor in a very hot day. Such variations in the size of the coating plates lead to excessive gaps which may prejudice the operation of the enclosed conveyor.

Further, all the intermediate modules of the conventional enclosed conveyor need to be manufactured with lower plates provided with a number of oblong holes in order to allow the due fixation of the coating plates, making the manufacture of the conventional enclosed conveyor also lengthy and costly.

In addition, the operation to replace the coating plates, which are eventually worn by the friction with the return portion of the conveyor belt, requires the disassembly of the bottom of the conventional enclosed conveyor, requiring said conventional enclosed conveyor to be inactive for a significant period of time.

### SUMMARY OF THE INVENTION

In order to solve the inconveniences of the state-of-the art, this invention proposes an enclosed conveyor comprising an enclosure formed by a plurality of side walls provided on a lower plate and comprising an upper plate provided on said side walls, said lower plate comprising an inner surface directed towards the inner part of said enclosure. Further, the enclosed conveyor comprises at least a conveyor roller mounted inside the enclosure, a conveyor belt comprising a conveying portion arranged over said conveyor roller and a return portion arranged over the inner surface of said lower plate, and at least a bottom cover arranged between the inner surface of the lower plate and the return portion of the conveyor belt. According to the invention, the fixation of the bottom cover to the enclosed conveyor is conducted only through a peripheral region of said bottom cover.

Preferably, the proposed enclosed conveyor comprises only a single bottom cover arranged throughout the longitudinal length of said enclosed conveyor.

### ADVANTAGES

Advantageously, the bottom cover of the proposed enclosed conveyor is only fixed by the peripheral region. In other words, the proposed enclosed conveyor is proved with fixation points distributed only throughout the peripheral region, and does not present fixation points distributed throughout the inner region of said bottom cover. Thus, the fixation process of the bottom cover is faster and more practical, because it decreases the quantity of fixation points requiring to be duly tightened.

Advantageously, due to the decreased quantity of fixation points of the bottom cover, the gaps generated by the expansion of said bottom cover is also decreased when it is mounted to the lower plate of the enclosed conveyor, so as to prevent the malfunctioning of said enclosed conveyor.

Advantageously, there's no need to manufacture all the intermediate modules of the proposed enclosed conveyor with oblong holes in the lower plates, which facilitates the manufacture of said enclosed conveyor. In other words, as the bottom cover of this invention requires a lower number of fixation points if compared to the coating plates of the conventional enclosed conveyor, the manufacturing process of the intermediate modules of proposed enclosed conveyor becomes simpler and faster to be conducted.

In addition, preferably, to replace the bottom cover of the proposed enclosed conveyorit is necessary to detach said bottom cover from the end of said enclosed conveyor, attach the new bottom cover to said worn bottom cover and, slowly, turn the traction motor on at the same time said worn cover is pulled by a steel cable. Thus, it is possible to remove the bottom cover without disassembling the whole enclosed conveyor. So, the bottom cover replacement operation is much faster and much less demanding in comparison with the operation to replace the coating plates of the conventional enclosed conveyor. By way of example, while the replacement process of the coating plates of a conventional enclosed conveyor occurs in a period of one or more weeks to be completed, the replacement of the bottom cover of the proposed enclosed conveyor is performed within a few days.

### BRIEF DESCRIPTION OF THE FIGURES

The invention will be better understood with the detailed description below, which will be better interpreted with the help of the figures, namely:
Figure 1 presents a perspective view of an enclosed conveyor according to this invention.
Figure 2 presents a longitudinal section view of the enclosed conveyor.
Figure 3 presents a longitudinal section view of the enclosed conveyor with no representation of a conveyor belt and the upper plates.
Figure 4 presents a cross-sectional view of the proposed enclosed conveyor.
Figure 5 presents a perspective view of the bottom cover according to this invention.
Figure 6 presents a perspective view of the intermediate module of a conventional enclosed conveyor with no representation of an upper plant and a conveyor belt.
Figure 7 presents an enlarged view of Figure 3 in the end of the enclosed conveyor with the traction module.
Figure 8 presents a perspective enlarged view of the lower portion of the end of the enclosed conveyor with the return module.

### DETAILED DESCRIPTION OF THE INVENTION

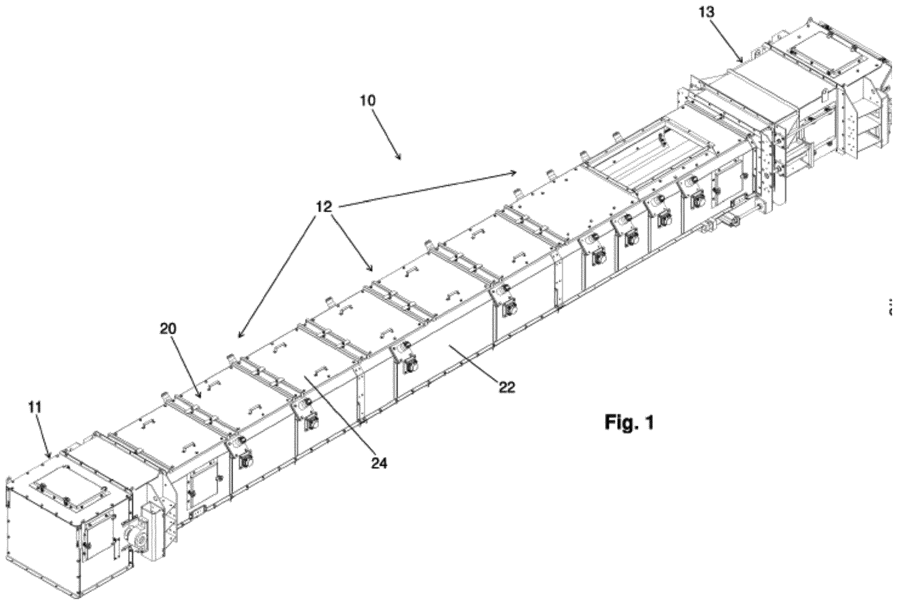

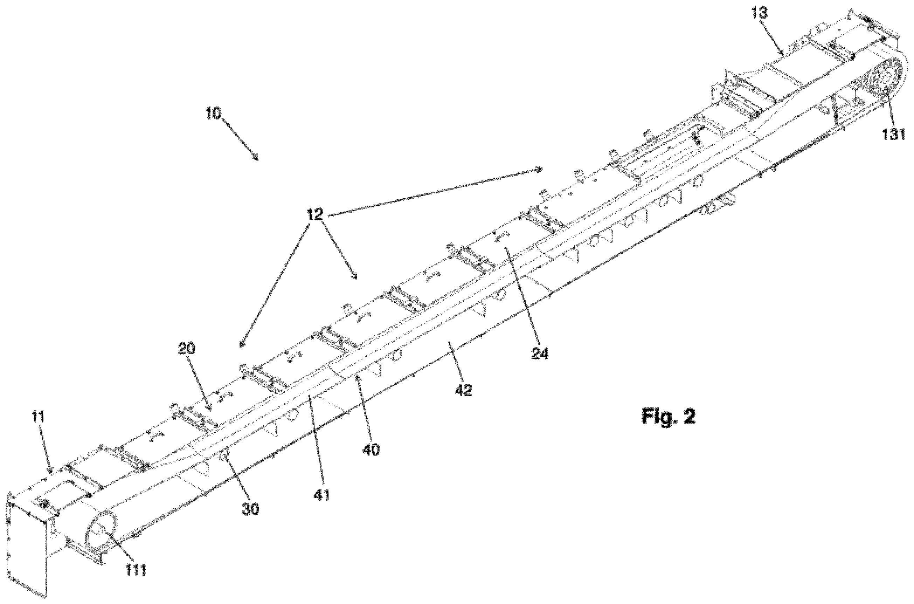

In a represented embodiment of this invention, as it can be viewed in Figures 1 and 2, an enclosed conveyor (10) is formed by a plurality of intermediate modules (12) of different lengths, by a return module (13) arranged in one of the ends, provided with a return roller (131), and by a traction module (11) provided in an opposed end, being said traction module (11) provided with a traction motor, not represented, cooperating with a traction roller (111). It is noted that modules (11, 12, 13) of the enclosed conveyor (10) are inter-connectable in their ends by means of bolted joints, the quantity or intermediate modules (12) depending on the desired length for the enclosed conveyor (10).

Further, the enclosed conveyor (10) comprises a conveyor belt (40) intended to carry a product to be transported in a manner already known in the state-of-the-art. The conveyor belt (40) is assembled inside the enclosed conveyor (10) so as to involve both the traction roller (111) of the traction module (11), and the return roller (131) of the return module (13), being said traction roller (111) responsible for running said conveyor belt (40) by activating the traction motor.

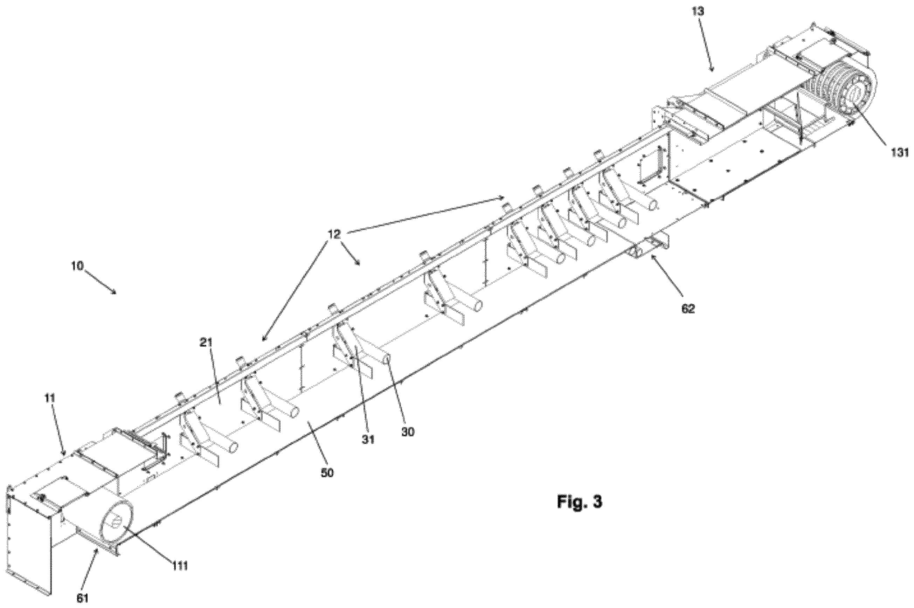

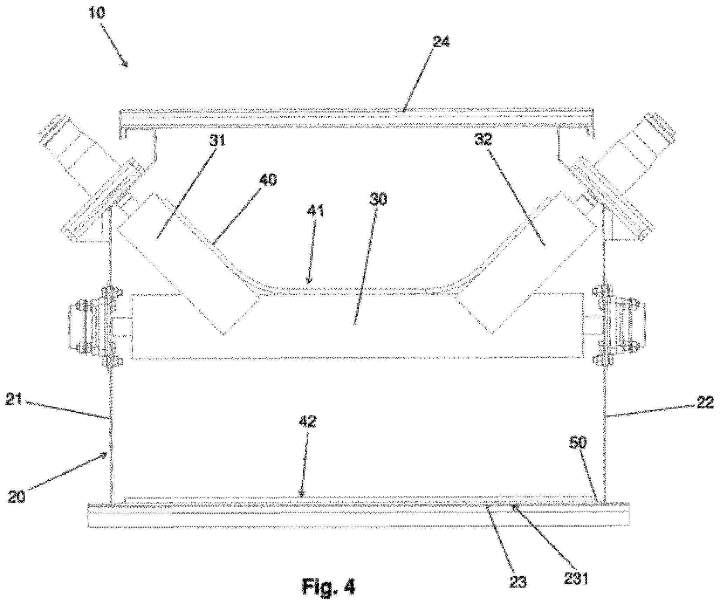

In addition, as it can be better viewed in Figures 3 and 4, one conveying portion (41) of the conveyor belt (40) is supported over the intermediate modules (12) of the enclosed conveyor (10) by means of at least one conveyor roller (30) arranged in each of said intermediate modules (12), while a return portion (42) of said conveyor belt (40) is arranged above a lower plate (23) of said enclosed conveyor (10).

In the presented embodiment, the conveyor belt (40) operates in a counterclockwise rotation direction, on which the conveying portion (41) of said conveyor belt (40) moves towards the traction roller (111) and the return portion (42) of said conveyor belt (40) moves towards the return roller (131).

Thus, the enclosed conveyor (10) as proposed by this invention, comprises an enclosure (20) formed by a plurality of side walls (21, 22) arranged over the lower plate (23) and provided with an upper plate (24) arranged over said side walls (21, 22), said lower plate (23) being provided with an inner surface (231) directed towards the inner part of said enclosure (20). Further, the enclosed conveyor (10) comprises at least a conveyor roller (30) mounted inside the enclosure (20), the conveyor belt (40) comprising the conveying portion (41) arranged over the said conveyor roller (30) and the return portion (42) arranged above the inner surface (231) of said lower plate (23), and at least a bottom cover (50) arranged between the inner surface (231) of the lower plate (23) and the return portion (42) of the conveyor belt (40). Thus, with the use of the bottom cover (50) it is possible to reduce the friction that the return portion (42) of the conveyor belt (40) would have with the lower plate (23) of the enclosure (20) and, consequently, reduce the wear suffered by said return portion (42) and by the said lower plate (23), and reduce the energy consumption of the traction motor (11).

According to the enclosed conveyor (10) proposed by this invention, the fixation of the bottom cover (50) to said enclosed conveyor (10) is conducted only through a peripheral region (51) of the said bottom cover (50).

Preferably, the enclosed conveyor (10) comprises only a single bottom cover (50) arranged throughout the longitudinal length of said enclosed conveyor (10).

In other words, the only bottom cover (50) proposed by this invention is arranged throughout the longitudinal length on which the conveyor belt would be in contact with the lower plate (23) of the enclosed conveyor (10). In an embodiment represented in the figures of this invention, the enclosed conveyor (10) comprises a single bottom cover (50) extending throughout all the intermediate modules (12).

In an alternative embodiment, and not represented, depending on the quantity of intermediate modules (12), the enclosed conveyor (10) may comprise a plurality of bottom covers consecutively arranged one after the other, so as to substantially cover the lower plate (23) of the enclosure (20) over all the intermediate modules (12). It is noted that even with the use of more than one bottom cover, the fixation of each bottom cover to the enclosed conveyor (10) is conducted only by the peripheral region of the respective bottom cover.

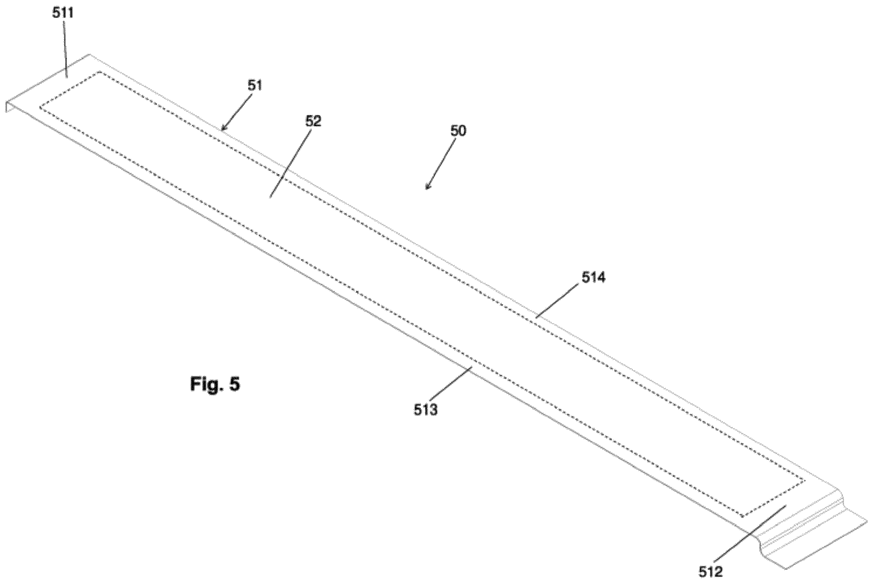

Preferably, the bottom cover (50) presents a substantially rectangular shape which extends throughout the longitudinal direction of the enclosed conveyor (10). In an illustrative manner, Figure 5 presents the bottom cover (50) along with a representation of the peripheral region (51) and of an inner region (52).

It is noted that the peripheral region (51) is defined as a region comprised both by the side surfaces of the bottom cover (50), related to the said bottom cover (50) thickness, and by an area around the entire surface of said bottom cover (50), being that said peripheral region (51) comprises an extension sufficient for the due fixation of said bottom cover (50) to the enclosed conveyor (10). In other words, the peripheral region (51) is comprised by the superficial area of the edges of the bottom cover (50) formed by a first longitudinal end (511), by a second longitudinal end (512) and by side edges (513, 514). Thus, the extension towards the inner region (52) of the longitudinal ends (511, 512) and the side edges (513,514) matches with the extension of the peripheral region (51).

The bottom cover (50) also comprises an inner region (52) defined as an internal superficial area of the bottom cover (50) adjacent to the peripheral region (51). In other words, the inner region (52) is surrounded by the peripheral region (51), more specifically, the said inner region (52) is surrounded by the longitudinal ends (511, 512) and by the side edges (513, 514). It is noted that the inner region (52) is the area over which the return portion (42) of the conveyor belt (40) is more in contact with the bottom cover (50) when compared with the peripheral region (51).

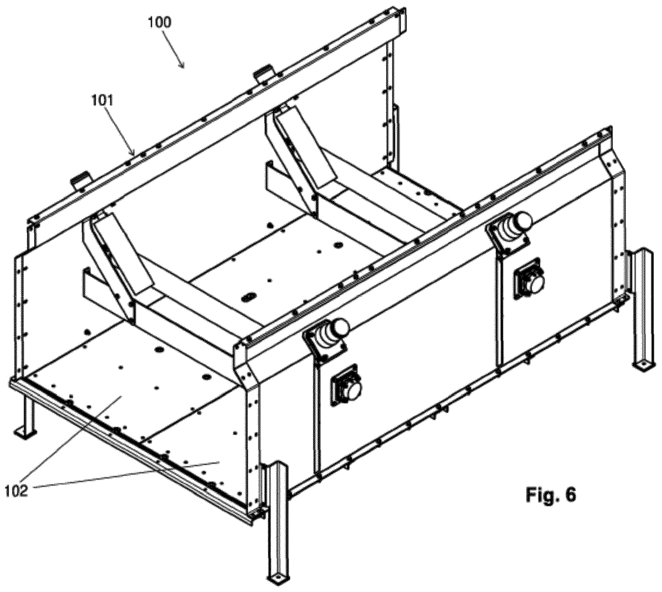

To better describe the difference between the fixation of the coating plates (102) mounted in a conventional enclosed conveyor (100) and the bottom cover (50) of the enclosed conveyor (10) proposed in this invention, Figure 6 presents a conventional intermediate module (101) which comprises at least a coating plate (102), preferably made of UHMW. For example, Figure 6 presents a conventional intermediate module (101) of a conventional enclosed conveyor (100) provided with two coating plates (102), each coating plate (102) being fixed to the conventional enclosed conveyor (100) by means of a plurality of fixation points distributed throughout the entire superficial area of the said coating plate (102), i.e., said fixation points are distributed both over an inner region and over a peripheral region of said coating plate (102).

Advantageously, the bottom cover (50) of the proposed enclosed conveyor (10) is fixed only by the peripheral region (51), so as to make the bottom cover fixation process faster and more practical due to the lower quantity of fixation points which need to the duly tightened.

Advantageously, due to the decreased quantity of fixation points of the bottom cover (50), the gaps generated by the expansion of said bottom cover (50) is also decreased when it is mounted to the lower plate (23) of the enclosed conveyor (10), so as to prevent the malfunctioning of said enclosed conveyor (10).

Advantageously, there's no need to manufacture all the intermediate modules (12) of the proposed enclosed conveyor (10) with oblong holes in the lower plates (23), making the manufacture of said intermediate modules (12) simpler and faster to be carried out.

In addition, with the used of the bottom cover (50) as proposed by this invention, it is possible to remove the bottom cover (50) without disassembling the entire enclosed conveyor (10) as already explained above. So, the bottom cover (50) replacement operation is much faster and much less demanding in comparison with the operation to replace all the coating plates (102) of the conventional enclosed conveyor (100).

In the represented embodiment of this invention, and in a manner already know in the state-of-the art, the enclosure (20) of the enclosed conveyor (10) comprises two side walls (21, 22). A first side wall (21) is mounted to one of the sides of the lower plate (23), while a second side wall (22) is arranged with the opposed side of said lower plate (23). The side walls (21, 22) are mounted with the lower plate (23) by means of a bolted joint. Likewise, the upper plate (24) is also bolted on the side walls (21, 22).

In the represented embodiment, each intermediate module (12) of the enclosed conveyor (10) comprises two horizontal conveyor rollers (30) longitudinally spaced over said intermediate module (12), each conveyor roller (30) presenting an end mounted in the first side wall (21) and the opposed end mounted in the second side wall (22). In addition, each conveyor roller (30) cooperates with a first and a second inclined rollers (31, 32), being the first inclined roller (31) mounted in the first side wall (21) and the second inclined roller (32) mounted in the second side wall (22). It is noted that the presented arrangement of a set of rollers formed by a conveyor roller (30) and a first and a second inclined rollers (31, 32) is already known in the state-of-the-art.

Alternatively, in a non-represented embodiment, in place of the set of rollers (30, 31, 32), the enclosed conveyor (10) may comprise a number of spool-type rollers or, further, comprise only a plurality of horizontal conveyor rollers (30). Both alternatives are also known in the state-of-the-art.

In the represented embodiment, it is noted that the conveying portion (41) of the conveyor belt (40) is arranged over a set of rollers (30, 31, 32), so that said conveying portion (41) of the conveyor belt (40) has a concave shape, appropriate for the transportation of the product to be transported. After the product to be transported in the traction module (11) is unloaded, the return portion (42) of the conveyor belt (40) moves towards the return module (13) so as to pass over the bottom cover (50) mounted in the inner surface (231) of the lower plate (23).

Preferably, the bottom cover (50) is made of a material similar to that of the conveyor belt (40), such as, for example, fabric fibers wrapped with rubber with additive intended to reduce the friction coefficient, enabling the friction reduction between the lower plate of the enclosure (20) and the return portion (42) of the conveyor belt (40). In addition, with the use of a belt for the bottom cover (50), it is possible to manufacture said bottom belt (50) with a longitudinal length desired for its correct assembly to the proposed enclosed conveyor (10). For example, the bottom cover (50) can be comprised by commercially available belts for other purposes and which are provided with compounds intended to improve the abrasion resistance and with low friction properties.

In the presented embodiment, the peripheral region (51) of the bottom cover (50) is fixed to the enclosed conveyor (10) by means of at least one fixation point. It is noted that a fixation point can be defined as being a place where fixation elements are mounted, such as, for example, a fixation like bolt and nut or welded points. Advantageously, the bottom cover fixation (50) of the enclosed conveyor (10) of this invention occurs only through the peripheral region (51) of the said bottom cover (50). In other words, the enclosed conveyor (10) has fixation points distributed only throughout the peripheral region (51), and there are no fixation points distributed throughout the inner region (52) of the said bottom cover (50).

Preferably, according to a presented embodiment, the bottom cover (50) is fixed to the enclosed conveyor (10) only through two longitudinal ends (511, 512) of the peripheral region (51). In other words, the fixation points of the bottom cover (50) are arranged only in the longitudinal ends (511, 512) of the said bottom cover (50).

In an alternative embodiment, and not presented, the bottom cover (50) can be fixed to the enclosed conveyor (10) only through one longitudinal end (511 or 512) of the peripheral region (51). In other words, the fixation points of the bottom cover (50) are arranged only in one of the longitudinal ends (511, 512) of the said bottom cover (50). In this case, depending on the rotation direction of the conveyor belt (40), either the first longitudinal end (511) of the bottom cover (50), or the second longitudinal end (512) of the said bottom cover (50) would be fixed with the enclosed conveyor (10).

In case the conveyor belt (40) runs in the counterclockwise rotation direction, the bottom cover (50) could be fixed to the traction module (11) only through the first longitudinal end (511), while the second longitudinal end (512) would remain free in the return module (13). Thus, due to the counterclockwise rotation direction of the conveyor belt (40), the bottom cover (50) would remain stretched due to the friction with the said conveyor belt (40).

In case the conveyor belt (40) runs in the clockwise rotation direction, the bottom cover (50) could be fixed to the return module (13) only through the second longitudinal end (512), while the first longitudinal end (511) would remain free in the traction module (11). Thus, due to the clockwise rotation direction of the conveyor belt (40), the bottom cover (50) would remain stretched due to the friction with the said conveyor belt (40).

However, in case the enclosed conveyor (40) has the possibility to drive the conveyor belt (40) both in the counterclockwise rotation direction and in the clockwise direction, the fixation of at least two longitudinal ends (511, 512) of the bottom cover (50) is recommended. In this case, the side edges (513, 514) of the bottom cover (50) would remain free, i.e., they would not be provided with fixation points.

Alternatively, in the not presented embodiment where the enclosed conveyor (10) comprises a plurality of bottom covers throughout its longitudinal extension, the fixation of the said number of bottom covers is conducted by fixing only one of the ends. In this case, the end of the bottom covers to be fixed also depends on the direction of the conveyor belt (40) rotation and follows the same concept used in the single bottom cover, where the end to be fixed will always be the one which enables the bottom cover to be stretched due to the friction with the conveyor belt.

Preferably, the fixation of at least one of the longitudinal ends (511 or 512) of the bottom cover (50) to the said enclosed conveyor (10) is conducted from a static fixation point (61), the said static fixation point (61) being able to prevent a longitudinal displacement of the said bottom cover (50).

Preferably, the fixation of at least one of the longitudinal ends (511 or 512) of the bottom cover (50) is conducted from an adjustable fixation point (62), being the said adjustable fastening point (62) able to restrict the free longitudinal movement of said bottom cover (50) and to compensate the longitudinal deformation caused by the friction. In addition, the adjustable fastening point (62) also allows an adjustment of the bottom cover (50) strainby stretching or loosening of the said bottom cover (50).

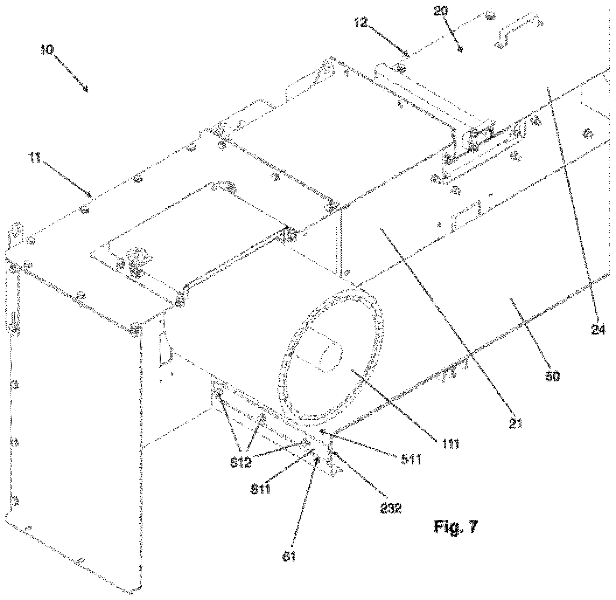

In the present embodiment, the fixation of the first longitudinal end (511) of the bottom cover (50) to the enclosed conveyor (10) is conducted from a static fastening point (61), as it can be seen in Figure 7. In the proposed embodiment, the static fastening point (61) is comprised by a fastening beam (611) mounted over a transversal extension (232) of the lower plate (23) of the enclosed conveyor (10) by means of fastening elements (612) such as, for example, pass-through bolts and self-locking nuts. It is noted that the transversal extension (232) is a portion of the end of the lower plate (23) of the enclosed conveyor (10) which is substantially transversal with respect to the rest of the said lower plate (23), and that the fastening beam (611) presses the first longitudinal end (511) of the bottom cover (50) against the inner surface (231) of the said transversal extension (232) by tightening the fastening elements (612). Thus, the bottom cover (50) is fixed to the enclosed conveyor (10) only through part of the peripheral region (51) of the said bottom cover (50), more specifically, only through the first longitudinal end (511).

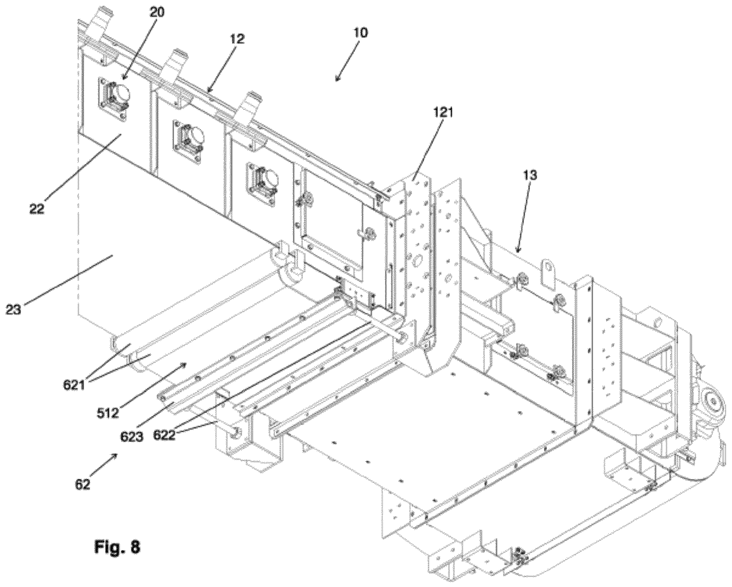

In the presented embodiment, the fixation of the second longitudinal end (512) of the bottom cover (50) to the enclosed conveyor (10) is conducted from an adjustable fastening point (62) as it can be viewed in Figure 8. In the proposed embodiment, the adjustable fastening point (62) is comprised by a pair of stretching rollers (621) spaced among each other, and mounted to the enclosed conveyor (10), and an stretching beam (623) cooperating with the second longitudinal end (512) of the bottom cover (50), said stretching beam (623) being adjustable by means of a pair of stretching screw spindles (622).

For the due mounting of the adjustable fastening point (62) to the bottom cover (50), the lower plate (23) of the enclosure (20) comprises a slot through which the second longitudinal end (52) of the said bottom cover (50) passes outside said enclosure (20) and among the stretching rollers (621). Thus, the stretching rollers (621) guarantee that the bottom cover (50) has its surface stretched, in such a way to enable the stretching beam (623) to be duly mounted in the second longitudinal end (512).

In the presented embodiment, the end of the intermediate module (12) which connects to the return module (13) of the enclosed conveyor (10) comprises a tab (121) on which it is possible to mount the pair of stretching screw spindles (622) across said tab (121). Thus, the stretching screw spindles (622) can cooperate with the stretching beam (623) mounted in the second longitudinal end (52) of the bottom cover (50) by means of a joint with bolts and self-locking nuts. Thus, it is possible to adjust the strain of the bottom cover (50) as needed by tightening or loosening the bolts of the stretching screw spindles (622).

In case it is necessary to apply strain in such a way to stretch the bottom cover (50), the nuts of the stretching screw spindles (622) must be tightened in order to move the stretching beam (623) and, consequently, the second longitudinal end (512) of the said bottom cover (50), towards the tab (121) of the enclosed conveyor (10).

On the other hand, in case it is necessary to decrease the strain of the bottom cover (50), i.e., to loosen said bottom cover (50), the nuts of the stretching spindles (622) must be turned in order to move the stretching beam (623) and, consequently, the second longitudinal end (512) of said bottom cover (50), in the direction opposite to the tab (121) of the enclosed conveyor (10).

Preferably, the stretching beam (623) extends along the entire bottom cover (50) width and is conformed with a shape which allows the alignment of the stretching force exercised by the stretching screw spindles (622) with said bottom cover (50). Thus, in case of stretching the bottom cover (50) by activating the stretching screw spindles (622), there will be no undesirable deformations in said bottom cover (50).

It is noted that any of the longitudinal ends (511, 512) of the bottom cover (50) can be fixed to the enclosed conveyor (10) by means of a static fastening point (61) or by means of an adjustable fastening point (62) depending only of identifying its need for a certain application.

Preferably, in a non-represented embodiment, the slot through which the second longitudinal end (512) of the bottom cover (50) passes out of the enclosure (20) of the enclosed conveyor (10) comprises a sealing system able to prevent the product transported by the conveyor belt (40) from leaving the inner part of said enclosed conveyor (10).

In an another alternative embodiment, and not represented, the bottom cover (50) is fixed to the enclosed conveyor (10) only by the side edges (513, 514). In other words, the fixation points of the bottom cover (50) are arranged only in the side edges (513, 514) of said bottom cover (50).

The preferable or alternative embodiments described herein do not have the power to limit this invention to the structural forms, and there can be constructive variation which are equivalent, however, without departing from the scope of protection of the invention.

## Claims

1. **ENCLOSED CONVEYOR** comprising
an enclosure (20) formed by a plurality of side walls (21, 22) arranged over a lower plate (23) and provided with an upper plate (24) arranged over said side walls (21, 22), being said lower plate (23) provided with an inner surface (231) directed towards the interior of said enclosure (20);
at least a conveyor roller (30) mounted inside said enclosure (20);
a conveyor belt (40) comprising a conveying portion (41) arranged over said conveyor roller (30) and a return portion (42) arranged above the inner surface (231) of said lower plate (23); and
at least one bottom cover (50) arranged between the inner surface (231) of the lower plate (23) and the return portion (42) of the conveyor belt (40),
**characterized by**
the fixation of the said bottom cover (50) to said enclosed conveyor (10) is conducted only through a peripheral region (51) of said bottom cover (50).

2. **ENCLOSED CONVEYOR** according to claim 1, **characterized by** comprising only a single bottom cover (50) arranged throughout the longitudinal length of said enclosed conveyor (10).

3. **ENCLOSED CONVEYOR** according to claims 1 or 2, **characterized by** the bottom cover (50) being fixed to the enclosed conveyor (10) only through a longitudinal end (511 or 512) of the peripheral region (51).

4. **ENCLOSED CONVEYOR** according to claims 1 or 2, **characterized by** the bottom cover (50) being fixed to the said enclosed conveyor (10) only through two longitudinal ends (511, 512) of the peripheral region (51).

5. **ENCLOSED CONVEYOR** according to claims 3 or 4, **characterized by** the fixation of at least one of the longitudinal ends (511 or 512) of the bottom cover (50) to said enclosed conveyor (10) being comprised by a static fastening point (61).

6. **ENCLOSED CONVEYOR** according to claims 3 or 4, **characterized by** the fixation of at least one of the longitudinal ends (511 or 512) of the bottom cover (50) to said enclosed conveyor (10) being comprised by an adjustable fastening point (62).

7. **ENCLOSED CONVEYOR** according to claim 5, **characterized by** the static fastening point (61) comprising a fastening beam (611) mounted on a transversal extension (232) of the lower plate (23) of said enclosed conveyor (10) by means of fastening elements (612).

8. **ENCLOSED CONVEYOR** according to claim 6, **characterized by** the adjustable fastening point (62) comprises stretching rollers (621), cooperating with the bottom cover (50), and a stretching beam (623) cooperating with the stretching screw spindles (622), said stretching screw spindles (622) being mounted in a tab (121) of the intermediate module (12) of said enclosed conveyor (10).

9. **ENCLOSED CONVEYOR** according to any of the previous claims, **characterized by** the bottom cover (50) being comprised by a belt.
